# EUROPEAN PATENT SPECIFICATION

(11) **EP 2 396 628 B1**
(45) Date of publication and mention of the grant of the patent: **12.12.2012**
(21) Application number: 09787646.0
(22) Date of filing: 13.02.2009
(51) Int. Cl.: G01D 5/48

(54) **MAGNETOSTRICTIVE POSITION TRANSDUCER WITH A PLURALITY OF FLAT COILS**
MAGNETOSTRIKTIVER POSITIONSWANDLER MIT MEHREREN FLACHSPULEN
CAPTEUR DE POSITION À MAGNÉTOSTRICTION COMPORTANT UNE PLURALITÉ DE BOBINES PLATES

(43) Date of publication of application: 21.12.2011
(73) Proprietor: Gefran S.p.A., 25050 Provaglio d'Iseo (Brescia) (IT)
(72) Inventor: PEZZOTTI, Michele, I-25054 Marone, Brescia (IT); MANESSI, Mauro, I-25046 Cazzago San Martino, Brescia (IT); GIULIANI, Andrea, I-25050 Provaglio d'lseo, Brescia (IT); CASATI, Marco, I-25063 Gardone Val Trompia, Brescia (IT); LODA, Damiano, I-25060 Cellatica, Brescia (IT); BOSCOLO, Antonio, I-34100 Trieste (IT)
(74) Representative: Mozzi, Matteo
(86) International application number: PCT/IT2009/000054
(87) International publication number: WO 2010/092604

(56) References cited:
- US-A- 3 898 555
- US-A- 5 313 160
- US-A1- 2004 090 225
- US-A1- 2005 200 353
- US-B1- 6 401 883

## Description

The present invention relates to a position transducer, and particularly to a magnetostrictive position transducer.

A position transducer of the magnetostrictive type is typically employed in those application fields in which a highly accurate detection of absolute position is required, for example, in the field of tools machines or ground handling machines.

As it is known, a magnetostrictive position transducer, hereinafter also simply referred to as magnetostrictive transducer, is arranged for the measurement of a position by means of a magnetic-type position marker (permanent magnet), i.e., a magnetic cursor which is floating relative to the magnetostrictive transducer.

A magnetostrictive transducer of the known type is composed of an outer metal profile which constitutes the shell of the very magnetostrictive transducer, which houses a waveguide of magnetostrictive material therein.

An excitation current pulse is made to flow on the waveguide or on a copper conductive wire coaxial to the same waveguide, such as to induce a magnetic field having circular symmetry around the waveguide.

The magnetic cursor (position marker) results to be arranged so as to determine the measurement of the absolute position (measurement point) of the magnetostrictive transducer operative zone.

As it is known, the magnetic cursor is implemented so that the lines of the magnetic field associated thereto result to be perpendicular to the magnetic field induced by the excitation current pulse.

In the magnetostrictive transducer measurement point, the magnetic field associated to the magnetic cursor, and the magnetic field induced by the excitation current pulse interact, and induce a torsional elastic deformation on the waveguide by magnetostrictive effect. Such deformation is realized in a torsional mechanical wave (typically of the helical elastic type) propagating starting from the measurement point in the two longitudinal directions of the same waveguide. On one hand, the propagation of the torsional mechanical wave is dampened by suitable mechanical dampeners, while, at the opposite end, the torsional mechanical wave is detected by a detection solenoid coil coupled to the circular tube, and converted to an electrical signal.

The time elapsed between the sending of the excitation current pulse in the waveguide and the detection of the torsional mechanical wave passage on the detection coil is the quantity measured by the magnetostrictive transducer, and it is proportional to the relative distance between the mobile magnetic cursor (measurement point) and the detection coil (reference point).

The magnetostrictive transducer of the known type described above has the drawback to result to be quite complex and cumbersome, especially as regards the detection solenoid coil. This drawback affects the construction times of the magnetostrictive transducer, and inevitably also the production costs of the same transducer.

Object of the present invention is to devise and provide a magnetostrictive position transducer which allows at least partially obviating the drawbacks described above with reference to the prior art.

Such object is achieved by a magnetostrictive position transducer in accordance with claim 1.

Preferred embodiments of said transducer are defined by the dependant claims 2-17.

Further characteristics and the advantages of the device according to the invention will be more clearly understood from the description reported below of preferred exemplary embodiments, given by way of nonlimiting example, with reference to the annexed Figures, in which:
- Fig. 1 schematically illustrates a sectional view of a magnetostrictive transducer according to an example of the invention;
- Fig. 2 shows a longitudinally sectioned perspective view of an element of the magnetostrictive transducer of Fig. 1;
- Fig. 3 shows a further phantom perspective view of an element of the magnetostrictive transducer of Fig. 1;
- Fig. 4 schematically illustrates mutually distinct elements of the magnetostrictive transducer according to a further example of the invention; and
- Fig. 5 schematically illustrates the elements of Fig. 4 mutually operatively associated according to the example of Fig. 1;
- Fig. 6 schematically illustrates elements of the magnetostrictive transducer according to a further example of the invention;
- Fig. 7 illustrates a block diagram representative of a preamplification electric circuit employed in the exemplary embodiments of the invention.

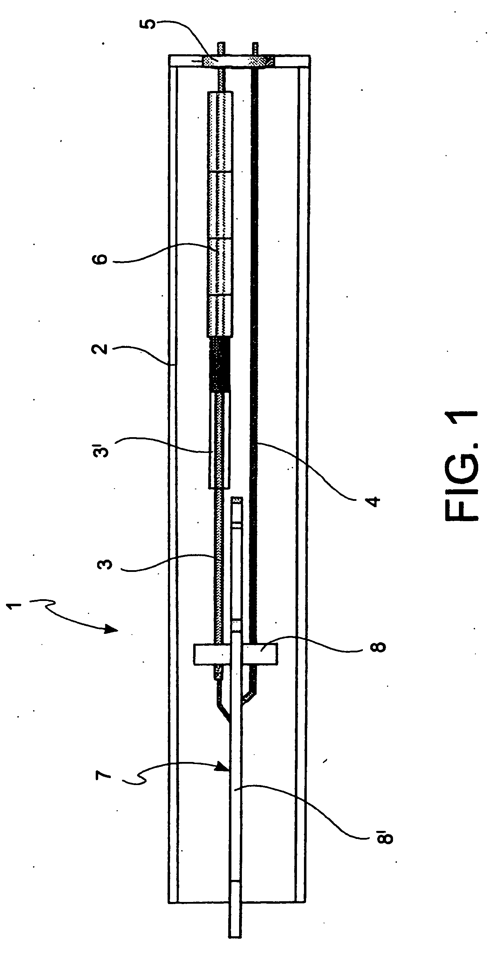

With reference to Fig. 1, a magnetostrictive position transducer, or simply magnetostrictive transducer, is now described, generally indicated with the reference numeral 1, according to an example of the invention.

The magnetostrictive transducer 1 comprises an outer metal profile 2 representing the housing shell of the very magnetostrictive transducer 1.

The magnetostrictive transducer 1 comprise a first magnetostrictive transduction member 3, for example, a waveguide of magnetostrictive material, for example, a nickel alloy, housed within the outer metal profile 2.

Furthermore, the waveguide 3 results to be preferably housed within a per se known sheath 3' (shown only in a portion in Fig. 1).

It shall be noted that in the described example, the waveguide 3 results to be a wire of magnetostrictive material.

Alternatively to the wire, the waveguide can be a tube of magnetostrictive material having a circular cross-section, or a bar having a different cross-section, for example, squared, rectangular, polygonal, oval, and so on.

In the described example, the waveguide 3 is arranged for the conduction and transport of an excitation current pulse from an end (where the excitation current pulse is inputted) to the other one of the waveguide 3;

In the further embodiment in which the waveguide 3 results to be a tube having a circular cross-section (neither being shown in the Figures), the magnetostrictive transducer 1 further comprises a conduction member (for example, a copper wire) operatively associated to the waveguide 3 for the conduction of the excitation current pulse from an end to the other one of the waveguide 3 (tube of circular cross-section). Typically, such conduction member results to be housed within the waveguide 3 of magnetostrictive material.

The magnetostrictive transducer 1 of the described example in Fig. 1 further comprises a second conduction member 4 (for example, a copper wire) representative of an excitation current pulse return path. In this regards, it is convenient to specify that the waveguide 3, also as a first conduction member, results to be representative of the excitation current pulse outward path.

Furthermore, it shall be noted that, in order to ensure the electrical continuity between waveguide 3 (outward path) and second conduction member 4 (return path), the magnetostrictive transducer 1 further advantageously comprises a connecting conduction member 5 electrically associated both to the waveguide 3 and to the second conduction member 4 preferably arranged at the end of the outer metal tube 2 opposite the end into which the current pulse is inputted in the waveguide 3.

Such connecting conduction member 5 can be any conventional electric connection elements such as, for example, a metal material track on a printed circuit board, a length of a metallic wire suitably welded, or a direct weld or electric contact obtained by a crimping operation between waveguide 3 and second conduction member 4.

The magnetostrictive transducer 1 further comprises, at the end of the outer metal tube 2 at which the connecting conduction member 5 is arranged, dampeners 6, preferably of silicon material, arranged in contact with the waveguide 3. Such per se known dampeners 6 act so as to dampen the torsional mechanical waves propagating along the waveguide 3 to the opposite end relative to the one at which the mechanical waves, as will be described below, are actually subjected to a detection and transduction.

The magnetostrictive transducer 1 further comprises a second transduction member 7, operatively associated to the waveguide 3 (first transduction member), for a physical signal generated by magnetostrictive effect by the transduction member 3.

As it will be also described below, by physical signal it is meant a torsional elastic mechanical wave, for example, of the helical type, propagating in the waveguide 3. It is pointed out that a magnetic field propagating in the waveguide and around it, which accompanies the same torsional mechanical wave is associated to such torsional mechanical wave by magnetostrictive effect.

It shall be noted that, advantageously, the second transduction member 7 comprises a plurality of flat coils (not shown in Fig. 1) distributed in a first printed circuit board 8.

To the purposes of the present description, by "printed circuit board" it is meant a monolayer or multilayer, rigid or flexible, support of insulating material, provided with tracks of conductive material.

In the example of Fig. 1, the first printed circuit board 8 results to be operatively associated to a second printed circuit board 8' which results to be arranged parallel to the longitudinal extent of the magnetostrictive transducer 1. It shall be noted that the waveguide 3 and the second conduction member 4 result to be electrically connected to the second printed circuit board 8'.

The characteristics of the first printed circuit board 8, the second printed circuit board 8', and the possible arrangements of the waveguide 3 and the second conduction member 4 relative to the first printed circuit board 8, will be described herein below in the following present description.

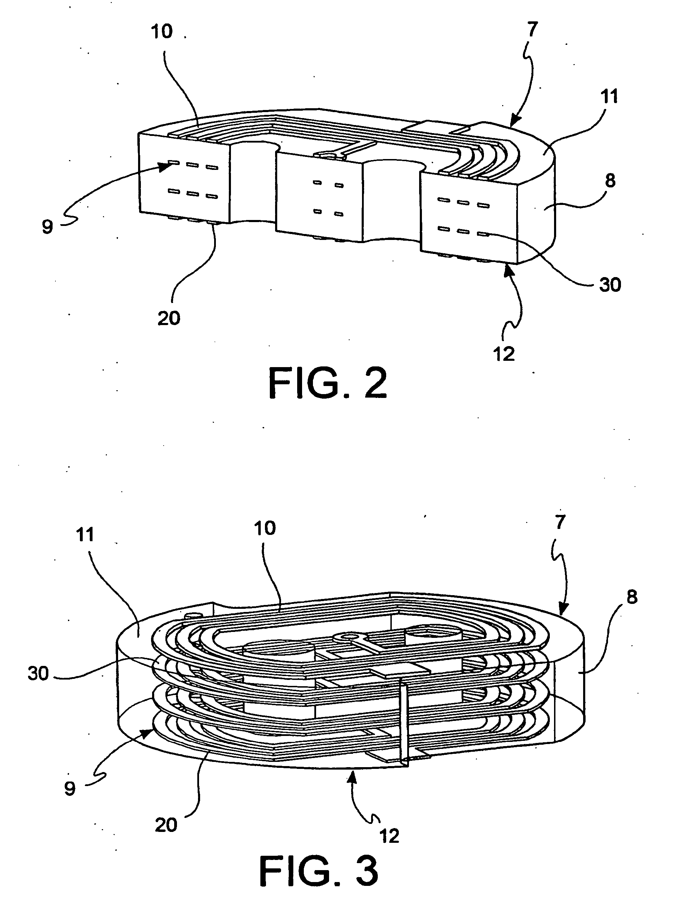

Referring now in particular to Fig. 2 (sectional perspective view of the first printed circuit board 8) and to Fig. 3 (phantom perspective view of the first printed circuit board 8), according to an exemplary embodiment, the second transduction member 7 (shown partially in Figs. 2 and 3) comprises a plurality of flat coils 9 distributed on more planes of the first printed circuit board 8 (in the example of the multilayer Figures) so that the coils result to be mutually aligned coaxially.

Particularly, the plurality of coils 9 in the example of Figs. 2 and 3 comprises a first flat coil 10 arranged on an upper face 11 of the printed circuit board 8, a second flat coil 20 arranged on a lower face 12 of the printed circuit board 8, and a plurality of inner coils 30 to the printed circuit board 8.

The predetermined number of coils of the plurality of inner coils 30 results to be as a function of the number of layers of the multilayer printed circuit board, preferably ranging between 2 and 14 layers.

In the example of Figs. 2 and 3, the first printed circuit board 8 results to have four layers, and the plurality of coils interne 30 comprises two flat coils.

Such distribution of the plurality of flat coils 9 advantageously allows increasing the detection sensitivity of the physical signal.

In a further embodiment, the plurality of flat coils 9 can comprise, in combination or as an alternative, more than one flat coil distributed on the same plane for each inner layer of the first printed circuit board 8, for the upper face 11 and for the lower face 12 of the first printed circuit board 8.

Some distribution examples of the plurality of flat coils on a same plane are: distribution only on the upper face of the first printed circuit board 8; distribution only on the first printed circuit board 8 lower face 12; distribution on both the upper 11 and the lower 12 faces of the first printed circuit board 8; flat distribution within one or more layers of the first (multilayer) printed circuit board 8.

Returning generally to the plurality of flat coils 9 of the described example, it is pointed out that each coil (for example, the first flat coil 10) comprises a conductive material track arranged according to a spiral type winding.

It shall be noted that the spiral type winding can have, alternatively, a polygonal or circular shape, or a shape comprising rectilinear lengths and curvilinear lengths (as in Figs. 2 and 3).

By polygonal shape, it is meant a squared, rectangular, hexagonal, pentagonal geometrical shape, and so on.

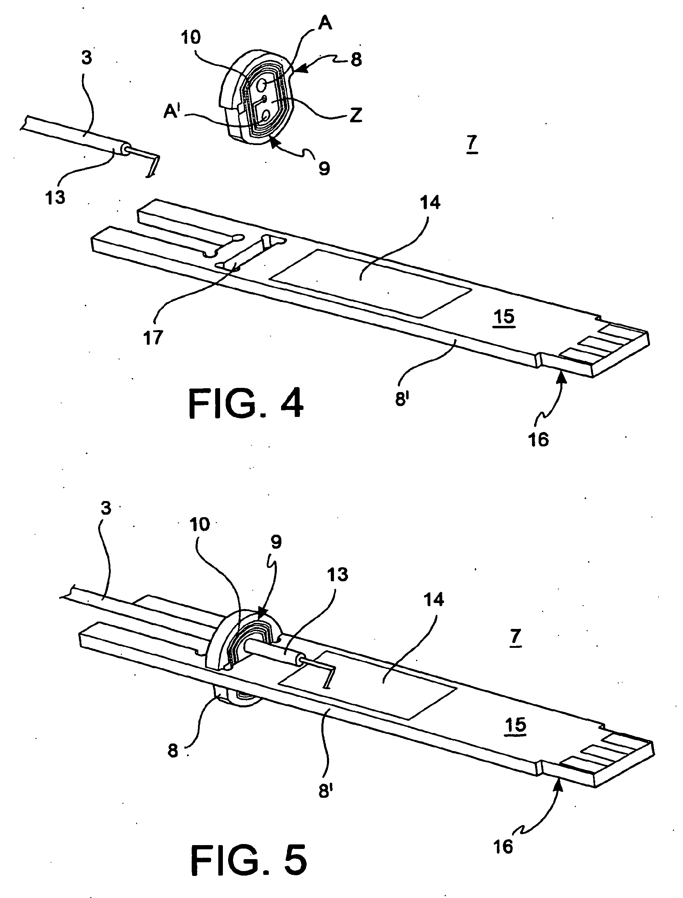

Reference is now made to the implementation example of Fig. 4 and 5, in which the plurality of flat coils 9 (in the Figure, only the first flat coil 10 results to be visible) results to be distributed in accordance to the example of Figs. 2 and 3.

As already stated with reference to Fig. 1, the second transduction member 7 comprises the first printed circuit board 8, comprising the plurality of flat coils 9, and the second printed circuit board 8'. The second printed circuit board 8' results to be arranged within the magnetostrictive transducer 1 so as to result to be parallel to the longitudinal extent of the waveguide 3.

The first printed circuit board 8 results to be operatively associated to the second printed circuit board 8' in such a manner as to orient the plurality of flat coils 9 normally to the second printed circuit board 8' and to the longitudinal extent of the waveguide 3.

In more detail, the second printed circuit board 8' results to be provided with an opening 17 (fig. 4) adapted to receive the first printed circuit board 8. The ultimate coupling between the first printed circuit board 8 and the second printed circuit board 8' can be obtained with conventional methods such, for example, glueing or welding. In an alternative embodiment, the first printed circuit board 8 can have such a configuration as to promote a snap-fitting thereof within the opening 17 which the second printed circuit board 8' is provided with.

The plurality of flat coils 9 (particularly, the first flat coil 10) results to be operatively associated to a first preamplification electric circuit 14 (schematically indicated in the Figures with a rectangle) of the electrical signal detected and transduced by the plurality of flat coils 9.

In more detail, according to the example of Fig. 4, the first preamplification electric circuit 14 results to be preferably arranged on an upper face 15 of the second printed circuit board 8'.

In a further embodiment, the first preamplification electric circuit 14 can be manufactured on a lower face 16 of the second printed circuit board 8'.

Again, in a further embodiment, the first preamplification electric circuit 14 can comprise a first portion and a second portion manufactured on the upper face 15 of the second printed circuit board 8' and on the lower face 16 of the second printed circuit board 8', respectively. Such embodiment advantageously allows further reducing the dimensions of the second printed circuit board 8'.

Furthermore, it is pointed out that the first printed circuit board 8 results to be provided with a first through opening A so arranged as to be passed through by a terminal portion 13 of the waveguide 3. Such first through opening A results to be arranged within a zone Z circumscribed by the plurality of flat coils 9 (in the above-mentioned Figures, the zone circumscribed by the first flat coil 10).

Furthermore, the first printed circuit board 8 results to be provided with a second through opening A' (visible only in Fig. 4) arranged within the circumscribed zone Z in order to be passed through by the second conduction member 4 (not shown in the Figures 4 and 5) .

In a further embodiment, such second through opening A' can be obtained outside the plurality of flat coils 9.

Furthermore, with particular reference to Fig. 5, the first printed circuit board 8 results to be operatively coupled to the second printed circuit board 8' so that the waveguide 3 is facing the upper face 15 of the second printed circuit board 8', and the second conduction member is facing the lower face 16 of the second printed circuit board 8'.

In embodiments alternative to the one described, the first printed circuit board 8 can be coupled to the second printed circuit board 8' so that the waveguide 3 and the second conduction member result to be both facing the upper face 15 or lower face 16 of the second printed circuit board 8'.

As already stated before, in the example described with reference to the Figs. 4 and 5, the first printed circuit board 8 results to be arranged so as to be operatively coupled to the second printed circuit board 8' so that the first printed circuit board 8 (and the plurality of flat coils 9) results to be normal to the second printed circuit board 8'.

In accordance to further embodiments (not shown in the Figures), the first printed circuit board 8 can be so arranged as to be coupled to the second printed circuit board 8', so that the first printed circuit board 8 (and the plurality of flat coils 9) results to be inclined relative to the second printed circuit board 8' by a predetermined inclination angle different from 90°.

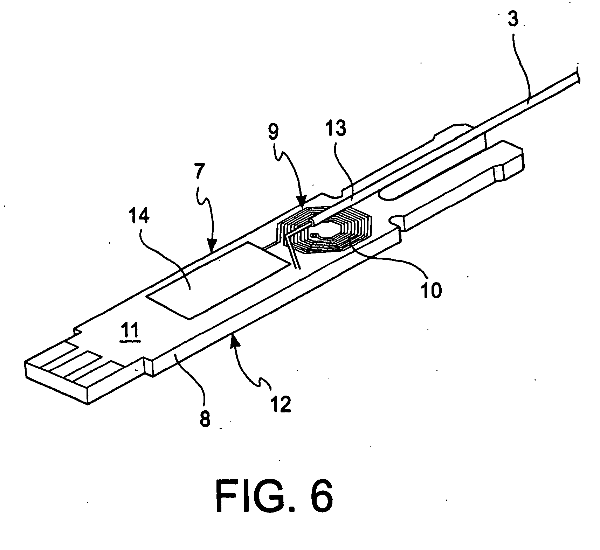

Referring now to the example of Fig. 6, the magnetostrictive transducer 1, similarly to the embodiment described above, comprises a second transduction member 7 comprising a plurality of flat coils 9 distributed in a first printed circuit board 8.

Particularly, the plurality of flat coils 9, as already described with reference to the Figs. 2 and 3, comprises a first flat coil 10 arranged on an upper face 11 of the first printed circuit board 8. In an embodiment, the plurality of flat coils 10 can comprise a plurality of inner coils to the first printed circuit board (not shown in Fig. 6) and/or a further flat coil arranged on a first printed circuit board 8 lower face 12.

According to the embodiment of Fig. 6, the first printed circuit board 8 results to be preferably oriented so that the upper face 11 of the first printed circuit board 8 results to be parallel to the longitudinal extent of the magnetostrictive transducer 1, and particularly to the longitudinal extent of a first transduction member 3 (waveguide) which the magnetostrictive transducer is provided with.

Furthermore, the first printed circuit board results to be arranged so that the plurality of flat coils 9 (particularly the first flat coil 10) results to be facing the longitudinal extent of a terminal portion 13 of the waveguide 3.

The plurality of flat coils 9 (particularly, the first flat coil 10) results to be operatively associated to a first preamplification electric circuit 14 of the electrical signal detected and transduced by the plurality of flat coils 9, also implemented on the printed circuit board 8.

The first electric circuit 14 is completely similar to the one described before with reference to the Figures 4 and 5.

In the example of Fig. 6, the first electric circuit 14 results to be arranged on the upper face 11 of the first printed circuit board 8, but it can also be distributed on the first printed circuit board 8 according to the alternative modes already described before with reference to the Figures 4 and 5.

Furthermore, it shall be noted that, advantageously, the first preamplification electric circuit 14 and the plurality of flat coils 9 are arranged one to the other so as to reduce noise and resistance effects between the wires employed for the electrical connection between the various components.

Particularly, it is pointed out that in a first embodiment, the first electric circuit 14 and the plurality of flat coils 9 can be manufactured on the same support (first printed circuit board 8).

Alternatively, according to another exemplary embodiment, the first electric circuit 14 and the plurality of flat coils 9 can be instead manufactured on different supports, but equally mutually electrically connected at a distance such as to reduce the above-mentioned noise and resistance effects.

In a further alternative embodiment, the first printed circuit board 8 can be oriented so that the upper face 11 of the first printed circuit board 8 results to be normal to the longitudinal extent of the magnetostrictive transducer 1, and particularly to the longitudinal extent of the waveguide 3 which the magnetostrictive transducer 1 is provided with.

Furthermore, the first printed circuit board results to be arranged so that the plurality of flat coils 9 (particularly the first flat coil 10) results to be facing the longitudinal extent of a terminal portion 13 of the waveguide 3.

Furthermore, the first printed circuit board 8 can be also provided with a first through opening A so arranged as to be passed through by a terminal portion 13 of the waveguide 3, and a second through opening A' so arranged as to be passed through by the second conduction member 4.

Such first and second through openings are completely similar to those described above with reference to the Figures 4 and 5.

The possible arrangements that the first A and the second A' through openings can take on the first printed circuit board 8 relative to the plurality of flat coils 9 are completely similar to those described above.

Generally, with reference to the embodiments of Figs. 4, 5, and 6, it shall be noted that the second transduction member 7 of the magnetostrictive transducer 1 results to be arranged so as to be operatively connected to a second processing electric circuit (not shown in the Figures) of the electrical signal pre-amplified by the first electric circuit 14.

Particularly, the second processing electric circuit can be implemented on the first printed circuit board 8 (for example, in the embodiment of Fig. 6) or on the second printed circuit board 8' (in the embodiment of Figs. 4 and 5).

In further embodiments, alternative to those described, the second processing electric circuit (not shown in the Figures) can also be implemented on a further printed circuit board arranged in a remote position relative to the magnetostrictive transducer 1.

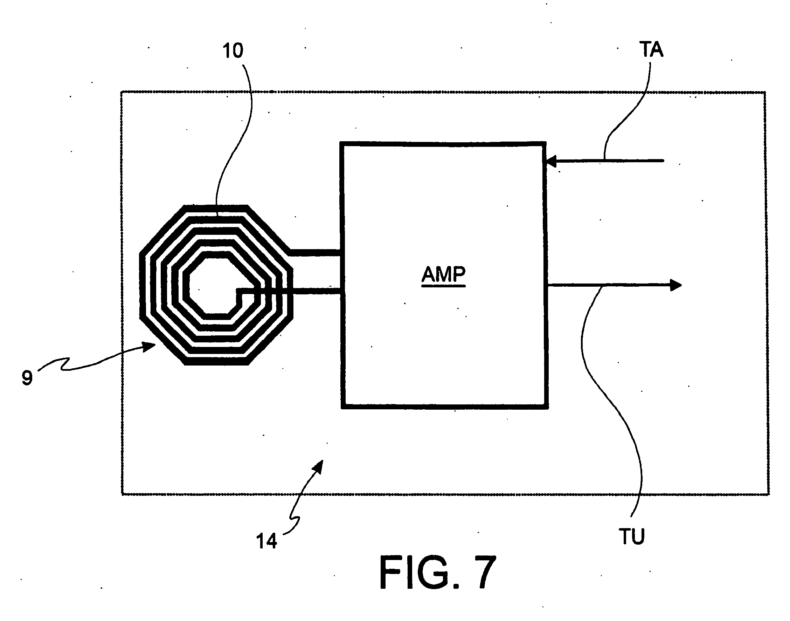

With reference to Fig. 7, an example of first preamplification electric circuit 14 which the second transduction member 7 (not shown in Fig. 7) is provided with is now schematically described.

The first preamplification electric circuit 14 comprises a per se known transconductance amplifier AMP, electrically associated to the plurality of flat coils 9 to receive the electrical signal therefrom representative of the detected physical signal transduction.

The transconductance amplifier AMP results to be provided with a supply terminal TA to receive a voltage-adjusted supply signal and with an output terminal TU to provide a pre-amplified electrical signal.

With particular reference to the example of Figs. 4 and 5, the functioning principle of the magnetostrictive transducer 1 is now described.

The plurality of flat coils 9 detects magnetic phenomena occurring in the terminal portion 13 of the waveguide 3.

From a physical standpoint, the torsional mechanical wave (physical signal) propagating within the waveguide 3 is generated by magnetostrictive effect by the interaction between a magnetic field associated to a floating magnetic cursor (not shown in the Figures) associable to the magnetostrictive transducer 1, and a magnetic field induced on the waveguide 3 by the excitation current pulse.

It shall be noted that the floating magnetic cursor is arranged where the position measurement is desired.

The plurality of flat coils 9 is arranged for the detection of the passage in the terminal portion 13 of the waveguide 3 of the physical signal represented by the torsional mechanical wave.

Following to the torsional mechanical wave detection, the plurality of flat coils 9 transduces the corresponding physical signal into an electrical signal, which is processed by the first preamplification electric circuit 14 and the second signal processing electric circuit.

The electrical signal is representative of the count stop moment of the measurement period.

It shall be noted that, to the purposes of the present invention, by measurement period it is meant the time elapsed between the start of the excitation current pulse in the transduction member 3 and the detection by the plurality of flat coils 9 of the physical signal representative of the torsional mechanical wave generated by magnetostrictive effect and the respective transduction thereof into an electrical signal.

The measurement period is proportional to the relative distance between the measurement point represented by the floating magnetic cursor and the plurality of flat coils 9.

As regards the specific functioning of the plurality of flat coils 9 as a second transduction member, it can be employed both in a closed circuit (detection of the physical signal under current) and in an open circuit (detection of the physical signal under voltage).

Particularly, the plurality of flat coils 9 is arranged to provide an electrical signal coming from the first preamplification electric circuit 14.

It shall be noted that according to the kind of amplification of the first preamplification electric circuit 14, the physical signal detection can occur according to one of the above-mentioned modes.

In the preferred case of the physical signal detection under current, the plurality of flat coils 9 is electrically connected to the inlet of a transresistance amplifier. In this configuration, the plurality of flat coils 9 is so arranged as to be passed through by an electric current representative also of the output signal of the plurality of flat coils 9.

In the alternative case of a detection of the physical signal under voltage, the plurality of flat coils 9 is electrically connected to the inlet of a high input impedance voltage amplifier (therefore, it is not so arranged as to be passed through by a current). In this configuration, the electric voltage generated at the ends of the plurality of flat coils 9 is representative also of the output signal of the same coil.

As it can be noticed, the object of the invention is fully achieved, since the manufacturing of the plurality of flat coils on a printed circuit board allows reducing the construction and maintenance costs for the magnetostrictive position transducer.

In fact, during the assembling step, the times for the operative association of the flat coil to the waveguide relative to the transducers with solenoid coil are quite reduced.

Again, the manufacturing of a plurality of flat coils on a printed circuit board advantageously allows increasing the reproducibility of the same coil and to have, in the event of a failure of the coil, of a quite identical coil.

Relative to the transducer with toroidal winding, an optional maintenance step which provides for the replacement of the flat coil results to be simple and fast, since it is sufficient to replace the printed circuit board.

Again, a flat coil and a signal processing electric circuit implemented on the same printed circuit board result to be readily integrable on silicon, thus actually increasing the engineering of the construction of the magnetostrictive position transducer with a related reduction of the costs and technical times required for assembling.

To the embodiments of the device described above, those skilled in the art, in order to meet contingent needs, will be able to make modifications, adaptations, and replacements of elements with other functionally equivalent ones, without departing from the scope of the following claims. Each of the features described as belonging to a possible embodiment can be obtained independently of the other embodiments described.

## Claims

1. A magnetostrictive position transducer (1) comprising:
- a first transduction member of the magnetostrictive type (3);
- a second transduction member (7), operatively associated to the first transduction member (3), for receiving a physical signal generated by magnetostrictive effect by the first transduction member (3) upon the passage of an excitation current pulse by the action of the interaction between a magnetic field associated to a magnetic cursor which can be associated to the magnetostrictive transducer (1) and a magnetic field induced by the excitation current pulse;
said magnetostrictive transducer (1) being **characterized in that** the second transduction member (7) comprises a plurality of flat coils (9) distributed in a first printed circuit board (8).

2. The transducer (1) according to claim 1, wherein the plurality of flat coils (9) comprises a first flat coil (10) arranged on an upper face (11) of the first printed circuit board (8).

3. The transducer (1) according to claim 2, wherein the plurality of flat coils (9) further comprises a second flat coil (20) arranged on a lower face (12) of the first printed circuit board (8).

4. The transducer (1) according to claim 3, wherein the plurality of flat coils (9) further comprises a plurality of inner flat coils (30) to the first printed circuit board (8), the first flat coil (10), the second flat coil (20), and the plurality of inner flat coils (30) resulting to be mutually coaxially aligned.

5. The transducer (1) according to claim 1, wherein the second transduction member (7) further comprises a second printed circuit board (8').

6. The transducer (1) according to claim 5, wherein the first printed circuit board (8) results to be operatively associated to the second printed circuit board so that the plurality of flat coils (9) results to be normal to a terminal portion (13) of the first transduction member (3).

7. The transducer (1) according to claim 6, wherein the first (8) and the second (8') printed circuit boards result to be operatively mutually associated so that the first printed circuit board (8) results to be essentially normal to the second printed circuit board (8').

8. The transducer (1) according to claim 5, wherein the first (8) and the second (8') printed circuit boards result to be operatively mutually associated so that the first printed circuit board (8') results to be inclined relative to the second printed circuit board (8') by a predetermined inclination angle.

9. The transducer (1) according to claim 5, wherein the first printed circuit board (8) results to be provided with a first through opening (A) at a zone circumscribed (Z) by the plurality of flat coils (9), said first through opening being so arranged as to be passed through by a terminal portion (13) of the first transduction member (3).

10. The transducer (1) according to claim 9, wherein they first printed circuit board (8) results to be further provided with a second through opening (A') arranged at the zone circumscribed (Z) by the plurality of flat coils (9), the magnetostrictive transducer (1) comprising a second conduction member (4) arranged so as to be inserted within the second through opening (A').

11. The transducer (1) according to claim 1, wherein each coil of the plurality of flat coils (9) comprises a conductive material track arranged flatly according to a spiral type winding.

12. The transducer (1) according to claim 11, wherein said spiral type winding results to be of a shape belonging to the group: polygonal shape, for example, of squared, rectangular, pentagonal, hexagonal, octagonal shape; circular shape; a shape comprising rectilinear lengths and curvilinear lengths.

13. The transducer (1) according to claim 5, wherein the second printed circuit board (8') further comprises a first preamplification electric circuit (14) of an electrical signal generated by the second transduction member (7).

14. The transducer (1) according to claim 7, wherein the second printed circuit board (8') comprises a first preamplification electric circuit (14) of the electrical signal generated by the second transduction member (7).

15. The transducer (1) according to claim 14, wherein the second transduction member (7) results to be arranged so as to be operatively connected to a second processing electric circuit of the electrical signal pre-amplified by the first electric circuit (14).

16. The transducer (1) according to claim 15, wherein the second processing electric circuit results to be implemented on the second printed circuit board (8').

17. The transducer (1) according to claim 1, wherein the first printed circuit board (8) results to be oriented so that an upper face (11) of the first printed circuit board (8) results to be parallel to the first transduction member (3) longitudinal extent, said first printed circuit board (8) being arranged so that the plurality of flat coils (9) results to be facing the longitudinal extent of a terminal portion (13) of the first transduction member (3).

## Patentansprüche

1. Magnetostriktiver Positionswandler (1), umfassend:
- ein erstes Wandlungselement der magnetostriktiven Art (3);
- ein zweitens Wandlungsefement (7), welches betriebsmäßig dem ersten Wandlungselement (3) zugeordnet ist, zum Empfangen eines physikalischen Signals, welches durch einen magnetostriktiven Effekt von dem ersten Wandlungselement (3) erzeugt wirt auf den Durchgang eines Anregungsstromimpulses hin durch die Winkung der Wechselwirkung zwischen einem Magnetfeld, welches einem magnetischen Zeigen zugeordnet ist, der dem magnetostriktiven Wandler (1) und einem durch den Anregungstromimpuls induzierten Magnetfeld zugeordnet sein kann;
wobei der magnetostriktive Wandler (1) **dadurch gekennzeichnet ist, dass** das zweite Wandlungselement (7) eine Mehrzahl von Flachspulen (9) umfasst, welche in einer ersten Leiterplatte (8) verteilt sind.

2. Wandler (1) nach Anspruch 1, wobei die Mehrzahl von Flachspulen (9) eine erste Flachspule (10) umfasst, welche an einher oberen Fläche (11) der ersten Leiterplatte (8) angeordnet ist.

3. Wandler (1) nach Anspruch 2, wobei die Mehrzahl von Flachspulen (9) ferner eine zweite Flachspule (20) umfasst, welche an einer unteren Fläche (12) der ersten Leiterplatte (8) angeordnet ist.

4. Wandler (1) nach Anspruch 3, wobei die Mehrzahl von Flachspulen (9) ferner eine Mehrzahl von inneren Flachspulen (30) zu der ersten Leiterplatte (8) umfasst, wodurch sich für die erste Flachspule (10), die zweite Flachspule (20) und die Mehrzahl von inneren Flachspulen (30) ergibt, gegenseitig koaxial ausgerichtet zu sind.

5. Wandler (1) nach Anspruch 1, wobei das zweite Transduktionelement (7) ferner eine zweite Leiterplatte (8') umfasst.

6. Wandler (1) nach Anspruch 5, wobei sich für die erste Leiterplatte (8) ergibt, betriebsmäßig der zweiten Leiterplatte zugeordnet zu sein, so dass sich für die Mehrzahl von Flachspulen (9) ergibt, orthogonal zu einem Endabschnitt (13) des ersten Wandlungselements (3) zu verlaufen .

7. Wandler (1) nach Anspruch 6, wobei sich für die erste (8) und die zweite (8') Leiterplatte ergibt, betriebsmäßig einander zugeordnet zu sein, so dass sich für die erste Leiterplatte (8) ergibt, im Wesentlichen orthogonal zur zweiten Leiterplatte (8') zu verlaufen.

8. Wandler (1) nach Anspruch 5, wobei sich für die erste (8) und die zweite (8') Leiterplatte ergibt, betriebsmäßig einander zugeordnet zu sein, so dass sich für die erste Leiterplatte (8') ergibt, relativ zur zweiten Leiterplatte (8') um einen vorbestimmten Neigungswinkel geneigt zu sein.

9. Wandler (1) nach Anspruch 5, wobei sich für die erste Leiterplatte (8) ergibt, mit einer ersten Durchgangsöffnung (A) bei einher vor der Mehrzahl von Flachspulen (9) umschriebenen Zone (Z) bereitgestellt zu sein, wobei die erste Durchgangsöffnung angeordnet ist, um von einem Endabschnitt (13) des ersten Wandlungselements (3) durchdringen zu sein.

10. wandler (1) nach Anspruch 9, wobei sich für die erste Leiterplatte (8) ergibt, ferner mit einer zweiten Durchgangsöffnung (A') bereitgestellt zu sein, welche bei der von der Mehrzahl von Flachspulen (9) umschriebenen Zone (Z) angeordnet ist, wobei der magnetostriktive Wandler (1) ein zweites Leitungselement (4) umfasst, welches angeordnet ist, um in der zweiten Durchgangsöffnung (A') eingefügt zu sein.

11. Wandler (1) nach Anspruch 1, wobei jede Spule der Mehrzahl von Flachspulen (9) eine leitfähige Materialbahn umfasst, welche flach gemäß einher spiralartigen Wicklung angeordnet ist.

12. Wandler (1) nach Anspruch 11, wobei sich für die spiralartige Wicklung ergibt, eine Form aufzuweisen, welche zur Gruppe gehört: polygonale Form, beispielsweise von quadratischer, rechteckiger, fünfeckigen, sechseckiger, achteckiger Form; kreisförmiger Form; eine Form umfassend geradlinige Längen und krummlinige Längen.

13. Wandler (1) nach Anspruch 5, wobei die zweite Leiterplatte (8') ferner einen ersten elektrischer Vorverstärkungsschaltkreis (14) eines von dem zweiten Wandlungselement (7) erzeugten elektrischen Signals umfasst.

14. Wandler (1) nach Anspruch 7, wobei die zweite Leiterplatte (8') einem ersten elektrischen Vorverstärkungsschaltkreis (14) des von dem zweiten Wandlungselement (7) erzeugten elektrischen Signals umfasst.

15. Wandler (1) nach Anspruch 14, wobei sich für das zweite Wandlungselement (7) ergibt, angeordnet zu sein, um betriebsmäßig mit einem zweiten elektrischen Verarbeitungsschaltkreis des von dem ersten elektrischen Schaltungkreis (14) vorverstärkten elektrischen Signals angeschlossen zu sein.

16. Wandle (1) nach Anspruch 15, wobei sich für den zweiten elektrischen Verarbeitungsschaitkreis ergibt, auf der zweite Leiterplatte (8') implementiert zu sein.

17. Wandler (1) nach Anspruch 1, wobei sich für die erste Leiterplatte (8) ergibt, ausgerichtet zu sein, so dass sich für eine obere Fläche (11) der ersten Leiterplatte (8) ergibt, parallel zur Längserstreckung des ersten Wandlungselements (3) zu verlaufen, wobei die erste Leiterplatte (8) derart angeordnet ist, dass sich für die Mehrzahl von Flachspulen (9) ergibt, zur Längserstreckung eines Endabschnittes (13) des ersten Wandlungselements (3) zu weisen.

## Revendications

1. Capteur de position à magnétostriction (1) comprenant :
- un premier élément de transduction du type à magnétostriction (3) ;
- un second élément de transduction (7), associé de manière opérationnelle au premier élément de transduction (3), pour recevoir un signal physique généré de magnétostriction par le premier élément de transduction (3) suite au passage d'une impulsion de courant d'excitation par l'action de l'interaction entre un champ magnétique associé à un curseur magnétique qui peut être associé au capteur à magnétostriction (1) et un champ magnétique induit par l'impulsion de courant d'excitation ;
ledit capteur à magnétostriction (1) étant **caractérisé en ce que** le second élément de transduction (7) comprend une pluralité de bobines plates (9) réparties dans une première carte de circuit imprimé (8).

2. Capteur (1) selon la revendication 1, dans lequel la pluralité de bobines plates (9) comprend une première bobine plate (10) agencée sur une face supérieure (11) de la première carte de circuit imprimé (8).

3. Capteur (1) selon la revendication 2, dans lequel la pluralité de bobines plates (9) comprend en outre une seconde bobine plate (20) agencée sur une face inférieure (12) de la première carte de circuit imprimé (8).

4. Capteur (1) selon la revendication 3, dans lequel la pluralité de bobines plates (9) comprend en outre une pluralité de bobines plates internes (30) sur la première carte de circuit imprimé (8), la première bobine plate (10), la seconde bobine plate (20) et la pluralité de bobines plates internes (30) étant mutuellement alignées de manière coaxiale.

5. Capteur (1) selon la revendication 1, dans lequel le second élément de transduction (7) comprend en outre une seconde carte de circuit imprimé (8').

6. Capteur (1) selon la revendication 5, dans lequel la première carte de circuit imprimé (8) est associée de manière opérationnelle à la seconde carte de circuit imprimé de sorte que la pluralité de bobines plates (9) est normale par rapport à une partie terminale (13) du premier élément de transduction (3).

7. Capteur (1) selon la revendication 6, dans lequel la première (8) et la seconde (8') carte de circuit imprimé sont associées de manière mutuellement opérationnelle de sorte que la première carte de circuit imprimé (8) est essentiellement normale par rapport à la seconde carte de circuit imprimé (8').

8. Capteur (1) selon la revendication 5, dans lequel la première (8) et la seconde (8') carte de circuit imprimé sont associées de manière mutuellement opérationnelle de sorte que la première carte de circuit imprimé (8) est inclinée par rapport à la seconde carte de circuit imprimé (8') selon un angle d'inclinaison prédéterminé.

9. Capteur (1) selon la revendication 5, dans lequel la première carte de circuit imprimé (8) est prévue avec une première ouverture de passage (A) au niveau d'une zone circonscrite (Z) par la pluralité de bobines plates (9), ladite première ouverture de passage étant agencée pour être traversée par une partie terminale (13) du premier élément de transduction (3).

10. Capteur (1) selon la revendication 9, dans lequel la première carte de circuit imprimé (8) est en outre prévue avec une seconde ouverture de passage (A') agencée au niveau de la zone circonscrite (Z) par la pluralité de bobines plates (9), le capteur à magnétostriction (1) comprenant un second élément de conduction (4) agencé afin d'être inséré à l'intérieur de la seconde ouverture de passage (A').

11. Capteur (1) selon la revendication 1, dans lequel chaque bobine de la pluralité de bobines plates (9) comprend une piste de matériau conducteur agencée à plat selon un enroulement de type à spirale.

12. Capteur (1) selon la revendication 11, dans lequel 1"enroulement de type à spirale a une forme appartenant au groupe : une forme polygonale, par exemple, une forme carrée, rectangulaire, pentagonale, hexagonale, octogonale ; une forme circulaire ; une forme comprenant des longueurs rectilignes et des longueurs curvilignes.

13. Capteur (1) selon la revendication 5, dans lequel la seconde carte de circuit imprimé (8') comprend en outre un premier circuit électrique de pré-amplification (14) d'un signal électrique généré par le second élément de transduction (7).

14. Capteur (1) selon la revendication 7, dans lequel la seconde carte de circuit imprimé (8') comprend un premier circuit électrique de pré-amplification (14) du signal électrique généré par le second élément de transduction (7).

15. Capteur (1) selon la revendication 14, dans lequel le second élément de transduction (7) est agencé afin d'être raccordé de manière opérationnelle à un second circuit électrique de traitement du signal électrique pré-amplifié par le premier circuit électrique (14).

16. Capteur (1) selon la revendication 15, dans lequel le second circuit électrique de traitement est mis en oeuvre sur la seconde carte de circuit imprimé (8').

17. Capteur (1) selon la revendication 1, dans lequel la première carte de circuit imprimé (8) est orientée de sorte qu'une face supérieure (11) de la première carte de circuit imprimé (8) est parallèle au premier élément de transduction (3) sur une étendue longitudinale, ladite première carte de circuit imprimé (8) étant agencée de sorte que la pluralité de bobines plates (9) fait face à l'étendue longitudinale d'une partie terminale (13) du premier élément de transduction (3).
